Europäisches Patentamt

European Patent Office

Office européen des brevets

(19)

(11) Publication number: **0 033 407**
**B1**

# EUROPEAN PATENT SPECIFICATION

(45) Date of publication of patent specification: **07.03.84**

(51) Int. Cl.³: **C 02 F  3/22, F 04 F  10/00**

(21) Application number: **80300320.1**

(22) Date of filing: **04.02.80**

(54) **A device for creating circulation within a body of liquid, and an apparatus for treating sewage or the like in a body of liquid.**

(43) Date of publication of application:
**12.08.81 Bulletin 81/32**

(45) Publication of the grant of the patent:
**07.03.84 Bulletin 84/10**

(84) Designated Contracting States:
**CH DE FR GB IT**

(56) References cited:
**GB - A - 1 400 723**
**US - A - 3 148 509**
**US - A - 4 169 873**

(73) Proprietor: **Atara Corporation**
**10355 Cote de Liesse Road**
**Dorval, Quebec, H9P 1A6 (CA)**

(72) Inventor: **Lipert, Peter**
**163 Roger Pelon Boulevard**
**Dollard des Ormeaux Quebec (CA)**

(74) Representative: **Boon, Graham Anthony et al,**
**Elkington and Fife High Holborn House 52/54**
**High Holborn**
**London, WC1V 6SH (GB)**

Courier Press, Leamington Spa, England.

## A device for creating circulation within a body of liquid, and an apparatus for treating sewage or the like in a body of liquid

The present invention relates generally to a circulating device for large standing bodies of liquids, and more particularly related to such a device in which large bubbles are generated.

There are many procedures that require the maintenance and agitation of large standing bodies of liquid, and the concurrent heating or cooling to control the temperature of such bodies of liquids. The presence of a solid phase within the liquid generally necessitates a continuing agitation of the liquid in order to suspend the solid more uniformly within the body of liquid, and simultaneously to maintain a substantially uniform optimum temperature throughout the liquid. Such requirements are often met, *inter alia*, in sewage digestion systems, and most especially in anaerobic sewage systems where violent agitation in the atmosphere is not possible. Because of the nature of the solids often encountered in such systems, it is desirable to avoid direct contact between moving mechanical parts and the body of liquid or the solids dispersed therein. Similarly, it is important that the conduits through which the liquid is caused to flow be sufficiently large as to decrease the likelihood of blockage or interference with the desired flow. Reliability, ease of servicing and maintenance, and the avoidance of any interference with the biological or chemical process being carried on in the liquid are of paramount importance.

Large bubble generators have often been used for the above purposes, as is shown, for example, in U.S. Patent No. 3,592,450 (Rippon), U.S. Patent No. 3,628,775 (McConnell), and U.S. Patent No. 3,246,761 (Bryan et al). Many of these devices include gas bubble generators comprising a gas accumulator tank and an inverted siphon connecting the accumulator tank to a vertically rising stackpipe.

According to the present invention there is provided a device for creating circulation within a body of liquid, the device comprising a substantially vertically extending stackpipe designed to be wholly submerged within the liquid, the stackpipe having an upper discharge opening and a lower inlet opening; a large-bubble generator located adjacent the stackpipe and comprising a gas-accumulator chamber having a peripheral wall, a top wall, and an opening at the chamber bottom; a substantially vertically extending standpipe adjacent the accumulator chamber and the stackpipe; an inverted siphon-defining fluid flow connecting means between the upper portion of the accumulator chamber and the standpipe; and means for delivering gas under pressure into the accumulator chamber; characterized in that it further comprises transverse gas flow conduit means communicating at a first end with the upper end of the standpipe and at a second end with the stackpipe, the second end of the conduit being above the level of the first end of the conduit, the transverse gas flow conduit means connecting through the peripheral wall of the stackpipe; and secondary liquid inlet means into the transverse conduit between the standpipe and the stackpipe.

In a preferred embodiment there is provided an additional opening adjacent the bottom of the standpipe; which serves as a pressure vent and permits an increase in the frequency of bubble emission for a given volume accumulator tank, before "motoring" begins. This, accordingly, permits a shorter hydraulic length for the stackpipe above the transverse conduit, i.e. the bubble inlet to the stack. The lower standpipe opening can be restricted, especially where an intermediate bubble emission rate is desirable. Generally the larger the lower standpipe opening the greater is the maximum gas flow rate above which "motoring" begins; but, at the same time, the larger opening also requires a larger minimum air flow to avoid uneven operation. Generally, for the most common standpipe diameter of between about 10cm and 20cm, the diameter of the lower orifice opening is about 25% of the internal diameter of the standpipe.

In a preferred embodiment of this type of generator, the junction between the standpipe and the transverse conduit to the stackpipe is open to the standing body of liquid. For example, this can be obtained by the use of a conical, or bell-shaped, inlet, decreasing in diameter towards the stackpipe, forming an open annulus around the open upper end of the standpipe. Generally, at least about 80% of the liquid pumped through the stack along with the passage of the large bubble of gas therethrough, enters the stack from its bottom opening. The remainder of the liquid enters the stack, following the gas bubble, through the secondary liquid inlet to the transverse conduit, such as the open annulus.

The bottom of the stackpipe can be as little as 7.5cm above the floor of the standing body of liquid if such is desirable, but optimally not more than about 30cm from the floor. The open top of the stackpipe is located beneath the surface of the standing body of liquid a distance of preferably at least about three times the diameter of the stackpipe. The optimum distance between the liquid surface and the top of the stackpipe can be obtained by using a conventional "cone force" formula well known to those skilled in the art, to obtain optimum entrainment;

$$Q_E = \frac{Q \times H}{3 \times D}$$

wherein Q is primary liquid flow through the stackpipe ($cm^3$/min),

H is stackpipe submergence (cm),

D is stackpipe diameter (cm), and

$Q_E$ is entrained flow ($cm^3$/min).

The transverse conduit connects into the stackpipe at a location sufficiently below the open top of the stack to permit and enhance the desired piston effect of the large gas bubble within the stackpipe. It has been found that the transverse conduit should be connected a distance below the top of the stack preferably equal to at least about four times the diameter of the stack (4D) and preferably a distance up from the bottom of the stack equal to at least about three times the diameter of the stack (3D).

In the accompanying drawings:

Figure 1 is a diagrammatic elevation sketch of a preferred large-bubble generator and accompanying standpipe and stackpipe;

Figure 2 is a side elevation sketch of an alternative embodiment of a large-bubble generator and accompanying standpipe and stackpipe.

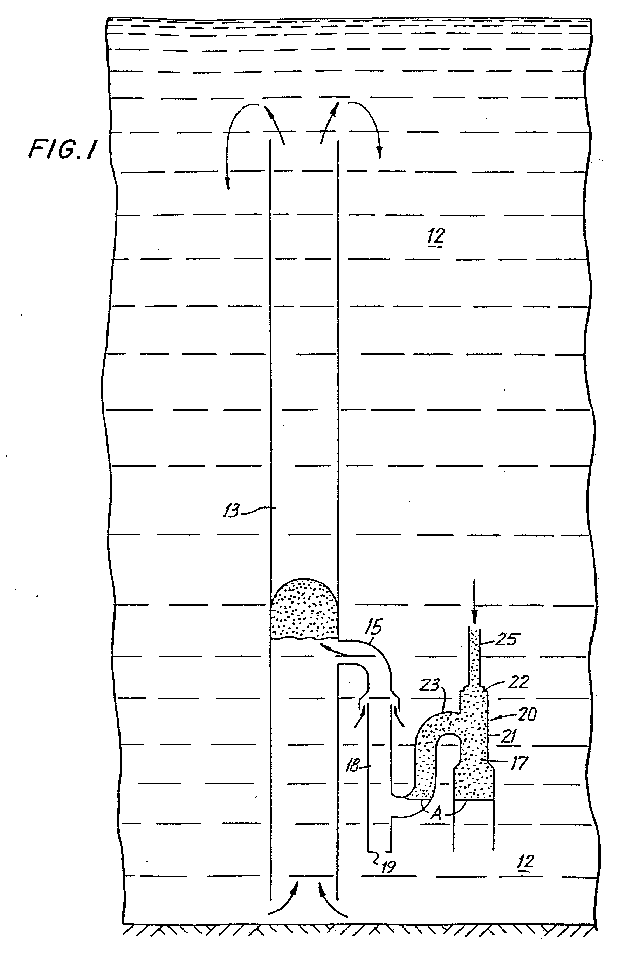

Referring to Figure 1, a preferred embodiment of the present invention is shown by way of example, as being completely submerged in a body of an aqueous liquid 12, such as an anaerobic sewage digestion tank or the like, and comprises an open-ended vertical conduit or stackpipe 13, supported within the body of liquid. The open lower end of the stackpipe can either be supported on a stand extending upward from the floor beneath the body of liquid, or by other means not shown. A side pipe 15, forming a T with the peripheral surface of the stackpipe 13 extends outwardly from the stack 13 ending in a flared, frusto-conical opening, pointing substantially downwardly. The frusto-conical inlet is downwardly, outwardly flared. A standpipe 18 is supported within the body of liquid, its open upper end centered within the flared opening of T-pipe 15, there being an annular opening between the end of standpipe 18 and the flared end of T-pipe 15. The lower end of standpipe 18 has a restricted orifice opening defined by lower plate 19. The plate 19 is sealed around its outer edges to the peripheral surface of pipe 18.

The large-bubble generator 20 is disposed generally adjacent to the standpipe 18 and stackpipe 13, and is also submerged within the standing body of liquid. The generator 20 comprises a circular cylindrical gas accumulator tank 17, having a flat circular top wall 22, and a depending cylindrical peripheral wall 21. The peripheral wall 21 defines a completely open bottom, open to the body of liquid. A bent conduit 23 projects through and extends outwardly from an opening through the peripheral wall 21 of the accumulator tank. The second end of curved pipe 23 connects through the peripheral wall of standpipe 18, whereby the curved pipe 23 and standpipe 18 form an inverted, U-shaped siphon, leading from the accumulator tank 17 to the flared opening of the transverse T-pipe 15.

In the operation of the large bubble generator embodiment described above, a gas is delivered to the gas accumulator tank 17 through inlet pipe 25. The gas, which is under pressure, enters accumulator tank 17, lowering the water level therein, and simultaneously lowering the water leg within bent pipe 23. As soon as the water level within accumulator tank 17 reaches below the level of the upper edge of the second bend in pipe 23, the level indicated by the letter A in Figure 1, all of the gas within tank 17 and leg 23 is rapidly siphoned out through legs 23 into standpipe 18 as a single large bubble. The large bubble rises upwardly through the standpipe 18, entering the flared opening of transverse pipe 15 and then into the stackpipe 13. The single large bubble expands to take up the entire cross-section of stackpipe 13, thus serving to raise all the liquid within the pipe above the bubble. As the large bubble pushes the water out the top of the stackpipe in front of it, additional liquid is brought into the stackpipe through its bottom opening. As shown in the diagram of Figure 1, by the arrows, a circulation through the standing body of liquid is thus obtained. As the bubble moves upwardly through the stackpipe 13, the bubble generating cycle is repeated, as the gas inlet continues to supply additional gas into the gas generator accumulator tank 17. In the preferred embodiment of this operation, a second gas bubble is generated up through the standpipe 18 before the preceding large gas bubble is ejected from the upper end of the stackpipe 13.

In addition to the liquid brought into the stackpipe through the open bottom thereof, a small percentage of liquid is also drawn in through the annular opening between the flared transverse part 15 and the standpipe 18. Generally, not more than about 20 percent of the water flowing through the stackpipe is drawn in through the annular opening, and optimally not more than about 5 percent is drawn in through the annular opening. The annular opening is especially desirable when the transverse pipe enters the stackpipe at a significant distance above the bottom opening of the stackpipe. This secondary inlet serves to avoid any vacuum effect that may otherwise be created within the large bubble generator and thus acts to supplement the opening at the bottom of the standpipe to enable operation at high gas flow rates without motoring.

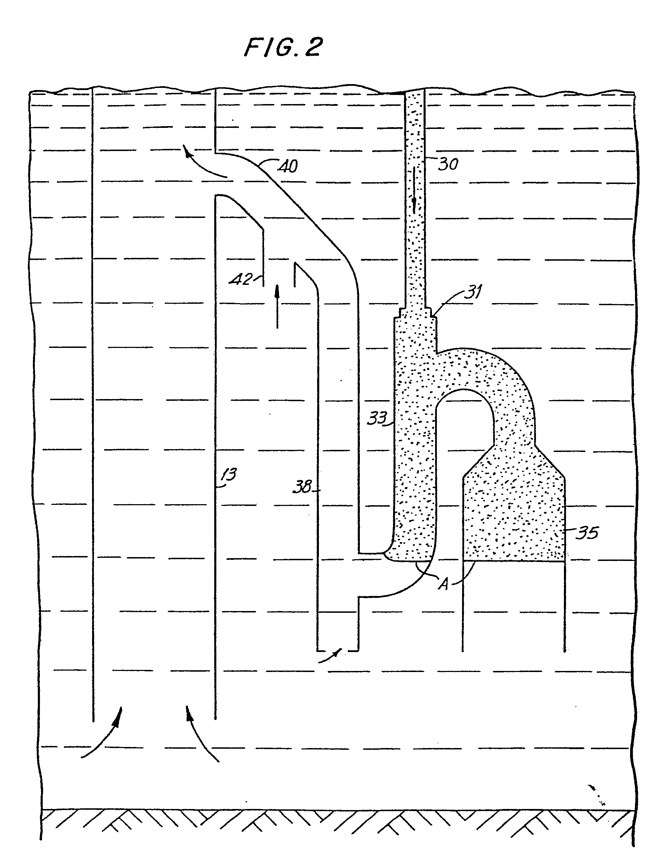

Figure 2 shows an alternative embodiment of the gas generator and stackpipe. The gas inlet 30 enters through a flat plate 31 above an extended portion of a bent curved pipe 33. The bent curved pipe is connected to the upper end of a gas accumulator tank 35, which is completely open at the bottom. The other end of the bent pipe 33 connects through the peripheral wall of standpipe 38, having a restricted lower opening, but connected directly to a transverse T-pipe 40 at its upper end, which is connected directly through the peripheral wall of the stackpipe 13. The connection between the transverse pipe 40 and standpipe 18 does not provide for the annular inlet opening as in Figure 1, but an equivalent supply of liquid is provided by a secondary inlet pipe 42, connected into the transverse T-pipe 40 at a point downstream from the connection with standpipe 38. Again, the great majority of liquid enters the stackpipe 13 through its open bottom, but a smaller proportion, again in the range of between 5 and 20 percent, enters through the secondary T-pipe 42. As is also shown by this embodiment, the location of a gas inlet 30 is not crucial, as long as it is about the level A, at which the liquid seal between the accumulator tank 35 and the standpipe 38 is broken, permitting the large bubble to be released and travel through the standpipe 38 and into the stackpipe 13. Once again, the restricted opening at the bottom of standpipe 18, permits an increase in the frequency of bubble emission compared to a closed bottom end, though the bottom end may be closed.

A feature of the operation of the embodiments of Figures 1 and 2, is that the large gas bubble is generated at a point intermediate the upper and lower ends of the stackpipe 13. This permits the use of a lower pressure gas supply than would be the case if the gas had to be fed in at the bottom of the stackpipe. Thus, the use of a transverse connection between the gas accumulator tank and the stackpipe permits the design of the most efficient system, where the energy supply can be used to maximum effect. The distance below the top of the stackpipe 13, at which the transverse pipe enters the peripheral wall thereof, need be limited only by the rate at which the large gas bubble rises through the liquid and the rate at which the large bubble can be generated without producing "monitoring" of the gas generator unit. For any given system of gas and liquid, the rate at which the bubble will rise through the stackpipe can be determined. Thus, in the preferred embodiment, the distance below the top opening of the stackpipe at which the large gas bubble enters the stackpipe is limited by the rate at which a bubble can be generated. The quicker a bubble can be generated without causing motoring, the closer to the top of the stackpipe the bubble can enter, and thus, the smaller the pressure required to generate the bubble. Gas is supplied from a source (not shown) located outside of the digestion tank.

The following examples further provide descriptions of preferred embodiment of the present invention.

Example I

In a large anaerobic sewage digestion tank, having a total capacity of 378,000l with a liquid height of about 6m, a stackpipe approximately 4.5m long is provided, the lower end being supported approximately 15cm above the floor of the tank, the upper end approximately 1.4m below the top surface of the liquid. The stackpipe has an internal diameter of 46cm. A transverse T pipe connects into the stackpipe at a location of about 1.8m below the open top end of the stackpipe. The T-pipe has an internal diameter of about 15cm, but, the open end flares out to a diameter at its inlet end of approximately 20cm internal diameter, the opening pointing substantially straight downwardly (see Figure 1). A standpipe having an open top end facing into and substantially level with the flared inlet to the transverse pipe has an internal diameter of 15cm. The bent pipe 23 also has an internal diameter of about 15cm and the gas accumulator tank 21 has an internal diameter of about 25cm. Level A in Figure 1 is located approximately 60cm below the top 22 of the accumulator tank 20. The opening at the bottom of the standpipe 18 has a diameter of approximately 5cm. Gas is supplied through inlet 25 at $0.5kg/cm^2$ gauge, at a rate of approximately $2m^3$/minute, measured at gauge pressure. A large gas bubble is generated every 1.5 seconds. The gas in the pressurized digestion tank, above the surface of the liquid, is maintained at a pressure of 0.035 $kg/cm^2$ gauge (above atmospheric pressure). An extremely efficient circulation of the large standing body of liquid is thus obtained, with a minimum clogging caused by the solid particles within the digesting liquid. Further, due to the large diameter and substantially straight nature of the majority of the piping system, the air supply line can also be used for double duty for "rodding" out of the air accumulator, to clean out any deposits formed therein.

Example II

Referring to the drawing of Figure 2, a stackpipe having a diameter of 25cm is completely immersed in its substantially vertical position as shown, within a 378,000l tank, holding a supply of standing liquid having a height of about 6m. The bottom of the stackpipe is approximately 15cm above the floor of the tank, the open top is approximately 1m below the top surface of the liquid. The transverse side pipe 40 has a nominal internal diameter of 20cm, and the standpipe 38 and bent pipe 33 (forming the inverted siphon) have a nominal internal diameter of 10cm. The diameter of the gas accumulator tank 35 is about 20cm, and the distance from the top of the tank 35 to level A is about 30cm. The transverse pipe 40 enters the peripheral wall of the stackpipe 13 at a level about 2.1m below the top of the stackpipe. The restricted lower opening to the standpipe 38 has an orifice diameter of about 3.8cm and the secondary inlet 42 has a nominal internal diameter of about 15cm.

Air is supplied to the gas supply line 30 at a pressure of about $0.45kg/cm^2$ gauge, and a

volumetric flow rate of about 0.5m³/minute measured at gauge pressure. A large bubble is generated every 2 seconds, a bubble being generated before the preceding bubble has been ejected from the top of the stackpipe 13. Between 80 and 95 percent of the liquid entering the stackpipe enters through the bottom and about 5 to 20 percent enters through the secondary inlet 42. The large bubble as it rises through the stackpipe substantially fills the cross-section thereof, acting as a piston to force the liquid above out the top of the stackpipe.

The stackpipe diameter should be sufficient to permit a flow of liquid sufficient to provide a significant current flow in the standing body of liquid. The accumulator tank and standpipe diameter should be such as to ensure adequate gas accumulation without excessive accumulator tank length, and to generate and pass a large gas bubble at an acceptable velocity and configuration, but sufficiently large to avoid any clogging due to agglomeration of solids on the standing liquid. The following table provides a suitable range of internal diameter sizes for each of these units, based upon the most commonly used stackpipe sizes of 45cm and 30cm internal diameter.

| Diameter of stackpipe (cm) | Diameter of accumulator tank (cm) | Diameter of standpipe (cm) |
|---|---|---|
| 45 | 30 | 13 |
| 45 | 25 | 15 |
| 45 | 20 | 20 |
| 30 | 20 | 10 |
| 30 | 15 | 13 |
| 30 | 10 | 10 |

From the above-described drawings, it can be seen that it is preferred that the transverse conduit connect into the stackpipe at a level equal to or above the top of the accumulator chamber.

**Claims**

1. A device for creating circulation within a body of liquid, the device comprising a substantially vertically extending stackpipe (13) designed to be wholly submerged within the liquid, the stackpipe (13) having an upper discharge opening and a lower inlet opening; a large-bubble generator (20) located adjacent the stackpipe (13) and comprising a gas-accumulator chamber (17, 35) having a peripheral wall (21), a top wall (22), and an opening at the chamber bottom; a substantially vertically extending standpipe (18, 38) adjacent the accumulator chamber (17, 35) and the stackpipe (13); an inverted siphon-defining fluid flow connecting means (23, 33) between the upper portion of the accumulator chamber (17, 35) and the standpipe (18, 38); and means for delivering gas under pressure into the accumulator chamber (17, 35); characterized in that it further comprises transverse gas flow conduit means (15, 40) communicating at a first end with the upper end of the standpipe (18, 38) and at a second end with the stackpipe (13), the second end of the conduit being above the level of the first end of the conduit, the transverse gas flow conduit means (15, 40) connecting through the peripheral wall of the stackpipe (13); and secondary liquid inlet means (42) into the transverse conduit (15, 40) between the standpipe (18, 38) and the stackpipe (13).

2. A device according to claim 1, wherein the said second end of the transverse gas flow conduit (15, 40) is at a position located below the top end of the stackpipe (13) a distance of at least four times the diameter of the stackpipe (13).

3. A device according to either preceding claim, wherein the said first end of the transverse conduit (15) comprises a divergent opening having a maximum diameter greater than that of the upper end of the standpipe (18), the upper end of the standpipe (18) opening into the divergent opening and defining an annular clearance between the standpipe upper end and the divergent opening, providing for the secondary inlet of liquid into the stackpipe (13).

4. A device according to any preceding claim, wherein the said second end of the transverse gas flow conduit (15, 40) is located above the bottom end of the stackpipe (13) a distance of at least three times the diameter of the stackpipe (13).

5. A device according to any preceding claim, wherein the lower end of the standpipe (18, 38) is open.

6. A device according to claim 5, wherein the ratio of the area of the secondary inlet opening to the area of the open lower end of the stackpipe (13) is designed to provide for not more than twenty percent of the liquid flow to enter the stackpipe (13) through the transverse conduit (15, 40).

7. A device according to any one of claims 1 to 4, wherein the lower standpipe opening is a restricted orifice opening (19).

8. A device according to any one of claims 1 to 4, wherein the lower end of the standpipe (18, 38) is closed.

9. A device according to claim 1 or 2, wherein the secondary inlet (42) to the transverse conduit (40) is through a peripheral wall of such transverse conduit (40), adjacent to the peripheral wall of the stackpipe (13) and is open to the liquid in which the device is designed to be submerged.

10. An apparatus for treating sewage or the like in a body of liquid, comprising a tank for the liquid body; a substantially vertically extending stackpipe (13) positioned within said tank, the stackpipe (13) having a lower inlet opening and an upper discharge opening below a predetermined level within said tank; a large-bubble generator (20) located within the tank adjacent the stackpipe (13) and comprising a gas accumulator chamber (17, 35) having a peripheral wall (21) and a top wall (22), the bottom of the chamber being substantially open; a substantially vertically extending standpipe (18, 38) adjacent the accumulator chamber (17, 35) and the stackpipe (13) within the tank; an inverted siphon-defining fluid flow connecting means (23, 33) between the upper portion of the accumulator chamber (17, 35) and the standpipe (18, 38); and pressure means for delivering gas under pressure into the accumulator chamber (17, 35); characterized in that it further comprises transverse gas flow conduit means (15, 40) between the upper end of the standpipe (18, 38) and stackpipe (13), the transverse conduit (15, 40) connecting through the peripheral wall of the stackpipe (13) at one end of the conduit, this one end of the conduit being above the level of the other end of the conduit; and secondary liquid inlet means (42) into the transverse conduit (15, 40) between the standpipe (18, 38) and the stackpipe (13).

11. An apparatus according to claim 10, wherein the bottom end of the stackpipe (13) is located a distance of from 7.5cm to 30cm above the bottom of the tank.

12. An apparatus according to claim 10 or 11, wherein the top end of the stackpipe (13) is located a distance of at least three times the diameter of the stackpipe (13) below the surface of any liquid in the tank.

**Patentansprüche**

1. Vorrichtung zur Erzeugung einer Zirkulation innerhalb eines Flüssigkeitskörpers, mit einem sich im wesentlichen vertikal erstreckenden, vollständig in der Flüssigkeit untergetauchten Schachtrohr (13) mit einer oberen Auslaß und einer unteren Einlaßöffnung; einem Großblasen-Generator (20) angrenzend zum Schachtrohr (13) angeordnet und bestehend aus einer Gasakkumulatorkammer (17, 35) mit peripherer Wand (21), einer oberen Wand (22) und einer Öffnung im Kammerboden; einem im wesentlichen vertikal verlaufenden Standrohr (18, 38) angrenzend zur Akkumulatorkammer (17, 35) und zum Schachtrohr (13); einen umgekehrten Siphon bildenden Verbindungsmitteln (23, 33) für einen Fluidumsfluß zwischen dem oberen Teil der Akkumulatorkammer (17, 35) und dem Standrohr (18, 38); sowie mit Gas unter Druck der Akkumulatorkammer (17, 35) zuführenden Mitteln, dadurch gekennzeichnet, daß Querverbindungs-Leitungsmittel (15, 40) für einen Gasfluß vorgesehen sind, die mit einem ersten Endbereich mit dem oberen Ende des Standrohrs (18, 38) und mit einem zweiten Endbereich mit dem Schachtrohr (13) in Verbindung stehen, wobei der zweite Endbereich der Leitung sich oberhalb des Niveaus des ersten Endbereichs befindet, die Querverbindungs-Leitungsmittel (15, 40) durch die periphere Wandung des Schachtrohrs (13) geführt sind und zwischen dem Standrohr (18, 38) und dem Schachtrohr (13) sekundäre, in die Querverbindungs-Leitungsmittel (15, 40) mündende Flüssigkeitseinlaßmittel (42) vorgesehen sind.

2. Vorrichtung nach Anspruch 1, dadurch gekennzeichnet, daß der zweite Endbereich der Querverbindungs-Leitungsmittel (15, 40) für den Gasfluß sich an einer Stelle unterhalb des oberen Endes des Schachtrohrs (13) in einem solchen Abstand befindet, der mindestens dem vierfachen des Schachtrohrdurchmessers entspricht.

3. Vorrichtung nach jedem vorhergehenden Anspruch, dadurch gekennzeichnet, daß das erste Ende der Querverbindungsleitung (15) eine divergierende Öffnung aufweist mit einem größten Durchmesser, der größer als das obere Ende des Standrohrs (8, 18) ist und daß sich das obere Ende des Standrohrs (18) in die divergierende Öffnung öffnet und zwischen dem oberen Standrohrende und der divergierenden Öffnung einen ringförmigen Abstand bildet, der als sekundärer Flüssigkeitseinlaß in das Schachtrohr (13) dient.

4. Vorrichtung nach einem der vorhergehenden Ansprüche, dadurch gekennzeichnet, daß das zweite Ende der Querverbindungsleitung (15, 40) oberhalb der Bodenöffnung des Schachtrohrs (13) in einem Abstand zu dieser angeordnet ist, der mindestens dem driefachen des Schachtrohrdurchmessers entspricht.

5. Vorrichtung nach einem der vorhergehenden Ansprüche, dadurch gekennzeichnet, daß das untere Ende des Standrohrs (18, 38) offen ist.

6. Vorrichtung nach Anspruch 5, dadurch gekennzeichnet, daß das Flächenverhältnis der sekundären Einlaßöffnung zur Öffnung am unteren Ende des Schachtrohrs (13) so bemessen ist, daß nicht mehr als 20% des Flüssigkeitsfluß dem Schachtrohr (13) durch die Querverbindungsleitung (15, 40) zugeführt wird.

7. Vorrichtung nach einem der Ansprüche 1 bis 4, dadurch gekennzeichnet, daß die untere Öffnung des Standrohrs eine eingeschränkte Drosselöffnung (19) ist.

8. Vorrichtung nach einem der Ansprüche 1 bis 4, dadurch gekennzeichnet, daß das untere Ende des Standrohrs (18, 38) abgeschlossen ist.

9. Vorrichtung nach Anspruch 1 oder 2, dadurch gekennzeichnet, daß der sekundäre Einlaß (42) in die Querleitung (40) durch eine periphere Wandung der Querleitung (40) geführt ist, angrenzend zur peripheren Wand des Schachtrohrs (13) und gegenüber der Flüssigkeit, in welche die Vorrichtung eintaucht, offen ist.

10. Apparat zur Behandlung von Abwässern oder dgl. in einem Flüssigkeitskörper, mit einem den Flüssigkeitskörper aufnehmenden Tank; einem sich im wesentlichen vertikal erstreckenden im Tank angeordneten Schachtrohr (13) mit einer unteren Einlaß- und einer oberen Auslaßöffnung die sich unterhalb einer vorgegebenen Höhe im Tank befindet; mit einem Großblasen-Generator (20) innerhalb des Tanks und angrenzend zum Schachtrohr (13) angeordnet und bestehend aus einer Gasakkumulatorkammer (17, 35) mit peripherer Wand (21), einer oberen Wand (22) und einer Öffnung im Kammerboden; einem im wesentlichen vertikal verlaufenden Standrohr (18, 38) angrenzend zur Akkumulatorkammer (17, 35) und zum Schachtrohr (13) innerhalb des Tanks; einen umgekehrten Siphon bildenden Verbindungsmitteln (23, 33) für einen Fluidumsfluß zwischen dem oberen Teil der Akkumulatorkammer (17, 35) und dem Standrohr (18, 38); sowie mit Gas unter Druck der Akkumulatorkammer (17, 35) zuführenden Druckmitteln, dadurch gekennzeichnet, daß Querverbindungs-Leitungsmittel (15, 40) für den Gasfluß zwischen dem oberen Ende des Standrohrs (18, 38) und dem Schachtrohr (13) vorgesehen sind, daß die Querverbindungsleitung (15, 40) mit ihrem einem Ende durch die periphere Wand des Schachtrohrs (13) in dieses einmündet, wobei dieses Ende sich oberhalb der Höhe des anderen Leitungsendes befindet und daß in die Querleitung (15, 40) zwischen dem Standrohr (18, 38) und dem Schachtrohr (13) sekundäre Flüssigkeitseinlaßmittel (42) einmünden.

11. Vorrichtung nach Anspruch 10, dadurch gekennzeichnet, daß das Bodenende des Schachtrohrs (13) sich in einem Abstand zwischen 7,5cm bis 30cm oberhalb des Tankbodens befindet.

12. Vorrichtung nach Anspruch 10 oder 11, dadurch gekennzeichnet, daß das obere Ende des Schachtrohrs (13) sich in einem Abstand unterhalb des Flüssigkeitsspiegels im Tank befindet, der mindestens das Dreifache des Schachtröhrendurchmessers beträgt.

**Revendications**

1. Dispositif de circulation d'un liquide dans une masse de liquide, comprenant un conduit de gaz (13) disposé en direction sensiblement verticale et destiné à être totalement immergé dans le liquide, le conduit de gaz (13) ayant un orifice supérieur d'évacuation et un orifice inférieur d'entrée, un générateur de grosses bulles (20) placé près du conduit de gaz (13) et comportant une chambre (17, 35) formant accumulateur de gaz et ayant une paroi périphérique (21), une paroi supérieure (22) et un orifice au fond de la chambre, une colonne montante (18, 38) disposée en direction sensiblement verticale près de la chambre d'accumulateur (17, 35) et du conduit de gaz (13), un dispositif de connexion (23, 33) de circulation d'un fluide, délimitant un siphon retourné entre la partie supérieure de la chambre d'accumulation (17, 35) et la colonne montante (18, 38), et un dispositif destiné à transmettre du gaz sous pression dans la chambre d'accumulation (17, 35), caractérisé en ce qu'il comporte en outre un conduit transversal de circulation de gaz (15, 40) communiquant à une première extrémité avec l'extrémité supérieure de la colonne montante (18, 38) et à une seconde extrémité avec le conduit de gaz (13), la seconde extrémité du conduit se trouvant au-dessus du niveau de la première extrémité du conduit, le conduit transversal (15, 40) de circulation de gaz étant raccordé à travers la paroi périphérique du conduit de gaz (13), et une entrée secondaire de liquide (42) débouchant dans le conduit transversal (15, 40) entre la colonne montante (18, 38) et le conduit de gaz (13).

2. Dispositif selon la revendication 1, caractérisé en ce que la seconde extrémité du conduit transversal (15, 40) de circulation de gaz est placée au-dessous de l'extrémité supérieure du conduit de gaz (13) à une distance au moins égale à quatre fois le diamètre du conduit de gaz (13).

3. Dispositif selon l'une des deux revendications précédentes, caractérisé en ce que la première extrémité du conduit transversal (15) comporte un orifice divergent ayant un diamètre maximal supérieur à celui de l'extrémité supérieure de la colonne montante (18), l'extrémité supérieure de la colonne montante (18) débouchant dans l'orifice divergent et délimitant un espace annulaire entre l'extrémité supérieure de la colonne montante et l'orifice divergent, constituant l'entrée secondaire de liquide dans le conduit de gaz (13).

4. Dispositif selon l'une quelconque des revendications précédentes, caractérisé en ce que la seconde extrémité du conduit transversal (15, 40) de circulation de gaz est placée au-dessus de l'extrémité inférieure du conduit de gaz (13) à une distance au moins égale à trois fois le diamètre du conduit de gaz (13).

5. Dispositif selon l'une quelconque des revendications précédentes, caractérisé en ce que l'extrémité, inférieure de la colonne montante (18, 38) est ouverte.

6. Dispositif selon la revendication 5, caractérisé en ce que le rapport de la section de l'orifice secondaire d'entrée à la section de l'extrémité inférieure ouverte du conduit de gaz (13) est tel que 20% au maximum du courant de liquide pénètrent dans le conduit de gaz (13) par le conduit transversal (15, 40).

7. Dispositif selon l'une quelconque des revendications 1 à 4, caractérisé en ce que l'orifice inférieur de la colonne montante est un orifice (19) de dimension limitée.

8. Dispositif selon l'une quelconque des revendications 1 à 4, caractérisé en ce que l'extrémité inférieure de la colonne montante (18, 38) est fermée.

9. Dispositif selon l'une des revendications 1 et 2, caractérisé en ce que l'entrée secondaire (42) dans le conduit transversal (40) est formée dans une paroi périphérique du conduit transversal (40) près de la paroi périphérique du conduit de gaz (13) et est ouverte au liquide dans lequel le dispositif est destiné à être immergé.

10. Appareil de traitement d'eaux usées ou analogues, dans une masse de liquide, comprenant un réservoir contenant la masse de liquide, un conduit de gaz (13) disposé en direction sensiblement verticale dans le réservoir, le conduit de gaz (13) ayant un orifice inférieur d'entrée et un orifice supérieur d'évacuation qui se trouvent au-dessous d'un niveau prédéterminé dans le réservoir, un générateur (20) de grosses bulles placé dans le réservoir prè du conduit de gaz (13) et comportant une chambre d'accumulateur de gaz (17, 35) ayant une paroi périphérique (21) et une paroi supérieure (22), la partie inférieure de la chambre étant pratiquement ouverte, une colonne montante (18, 38) disposée en direction sensiblement verticale près de la chambre d'accumulation (17, 35) et du conduit de gaz (13) dans le réservoir, un dispositif de connexion (23, 33) destiné à la circulation du fluide et délimitant un siphon retourné entre la partie supérieure de la chambre d'accumulation (17, 35) et la colonne montante (18, 38), et un dispositif destiné à transmettre du gaz sous pression dans la chambre d'accumulation (17, 35), caractérisé en ce qu'il comporte en outre un conduit transversal (15, 40) de circulation de gaz disposé entre l'extrémité supérieure de la colonne montante (18, 38) et le conduit de gaz (13), le conduit transversal (15, 40) traversant la paroi périphérique du conduit de gaz (13) à une première extrémité du conduit transversal, cette première extrémité se trouvant au-dessus du niveau de l'autre extrémité du conduit transversal, et une entrée secondaire (42) de liquide débouchant dans le conduit transversal (15, 40) entre la colonne montante (18, 38) et le conduit de gaz (13).

11. Appareil selon la revendication 10, caractérisé en ce que l'extrémité inférieure du conduit de gaz (13) est à une distance de 7,5 à 30cm au-dessus du fond du réservoir.

12. Appareil selon l'une des revendications 10 et 11, caractérisé en ce que l'extrémité supérieure du conduit de gaz (13) se trouve à une distance de la surface du liquide présent dans le réservoir qui est au moins égale à trois fois le diamètre du conduit de gaz (13) et au-dessous de cette surface.

FIG.1

## FIG. 2